# EUROPEAN PATENT SPECIFICATION

(11) **EP 1 269 446 B1**
(45) Date of publication and mention of the grant of the patent: **28.10.2009**
(21) Application number: 01914527.5
(22) Date of filing: 27.02.2001
(51) Int. Cl.: G08G 1/00, G01S 13/93

(54) **MOUNTING FOR PROXIMITY RADAR**
ANBRINGUNG FÜR NÄHERUNGSRADAR
MONTAGE D'UN RADAR DE PROXIMITE

(30) Priority: 28.02.2000 GB 0005312; 20.03.2000 US 531290
(43) Date of publication of application: 02.01.2003
(73) Proprietor: Visiocorp Patents S.à.r.l., 1653 Luxembourg (LU)
(72) Inventor: SCHWARZ, Paul, M., South Australia 5041 (AU); TEAL, Richard, G., Hampshire PO8 8BD (GB); EVANS, Robert, J., Havant, Hampshire PO9 5TQ (GB)
(74) Representative: Rausch, Gabriele
(86) International application number: PCT/US2001/006236
(87) International publication number: WO 2001/065519

(56) References cited:
- WO-A-99/42856
- GB-A- 2 344 481
- US-A- 1 792 157
- US-A- 3 794 997
- US-A- 4 903 004
- US-A- 5 646 613
- US-A- 5 980 048
- US-E- R E34 773

## Description

The present invention relates generally to a vehicle radar system and, more particularly, to a carrier for one or a number of radar sensors for installation on a vehicle by attaching the carrier to the vehicle.

The increasing use of sophisticated electronics has provided for numerous technological advancements on vehicles. One such technological advancement is collision avoidance systems that inform drivers of objects in possible collision zones, such as the rear, sides, and the front of a vehicle. Collision avoidance systems are particularly applicable for enhancing the driver's view of rearward and sideward portions of the vehicle, particularly when moving in a reverse direction.

The installation of a collision avoidance system on a vehicle generally requires the placement of radar, infrared, or other object detection sensors at particular locations on the vehicle depending upon the particular purpose of the collision avoidance system. Many collision avoidance systems require the installation of one or a number of sensors to fully analyze a particular area around a vehicle. During the assembly process, the installation of such sensors and wiring interconnecting the sensors can be a timely and costly process.

Existing production methods typically require a single operator to sequentially install the sensors. This production method can often be very time consuming. Alternatively, a number of operators can each individually install a particular sensor. While this reduces the overall time for installing the group of sensors, this production method requires a greater number of operators and consequently increases the cost.

Thus, there is a need for a sensor mounting system for a vehicle which facilitates installation of a plurality of sensors to the vehicle, thereby reducing the time and costs for assembling the vehicle.

US-A-3 794 997 discloses features according to the precharacterising portion of claim 1.
It is known from US3794997 to use a sensor system to avoid collisions. The device is mounted on a vehicle and has fasteners to attach the sensor device.
It is also known from prior art US 5980048 to combine sensor systems for a trailer and a vehicle.

According to a first aspect of the present invention there is provided a sensor assembly according to claim 1.

According to a second aspect of the present invention there is provided a sensor assembly for a caravan according to claim 14.

There is described hereinafter a sensor assembly for a vehicle including a plurality of sensors for operation of a radar system. Each sensor includes either or both of a transmitter for generating a radar signal and a receiver for detecting the radar signal upon reflection from an object. The sensor assembly also includes a carrier having an elongate shape and formed in sections. Each section interconnects by a hinge and each of the plurality of sensors mounts to the carrier. The carrier is mounted to the vehicle to orient the sections in a predetermined position on the vehicle.

For a more complete understanding of the invention, its objects and advantages, reference should be made to the following specification and to the accompanying drawings.

The drawings, which form an integral part of the specification, are to be read in conjunction therewith, and like reference numerals are employed to designate identical components in the various views:
Figure 1 is a plan view of a vehicle having sensors carrier assemblies arranged in accordance with the principles of the present invention;
Figure 2 is a perspective view of a sensor carrier assembly;
Figure 3 is a perspective view showing a sensor carrier mounted to the vehicle beneath the bumper;
Figure 4 is a perspective view showing a sensor carrier assembly mounted to the exterior of a vehicle bumper;
Figure 5 is a horizontal sectional view showing a first configuration for attaching a sensor to the carrier;
Figure 6 is a horizontal sectional view of a second configuration for attaching a sensor to the carrier;
Figure 7 is a horizontal sectional view showing a first fastener configuration for attaching the carrier to the vehicle;
Figure 8 is a horizontal sectional view showing a second fastener configuration for attaching the carrier to the vehicle;
Figure 9 is a horizontal sectional view of the car and carrier interconnection showing the position of the fasteners relative to the sensors;
Figure 10 is a horizontal sectional view showing material inserted between the car and the carrier to reduce noise and vibration;
Figure 11 is a block diagram of a sensor control system;
Figure 12 is a partial view of the sensor assembly showing wires mounted to the carrier assembly for interconnecting the sensors;
Figure 13 is a cross sectional view along the lines of 13-13 showing the carrier supporting an electrical conductor interconnecting electrical components supported by the carrier;
Figure 14 is a plan view of a vehicle and trailer caravan having a sensor carrier assembly in each of the vehicle and trailer, and
Figure 15 is a block diagram of an interconnect lockout circuit for the system of Figure 14.

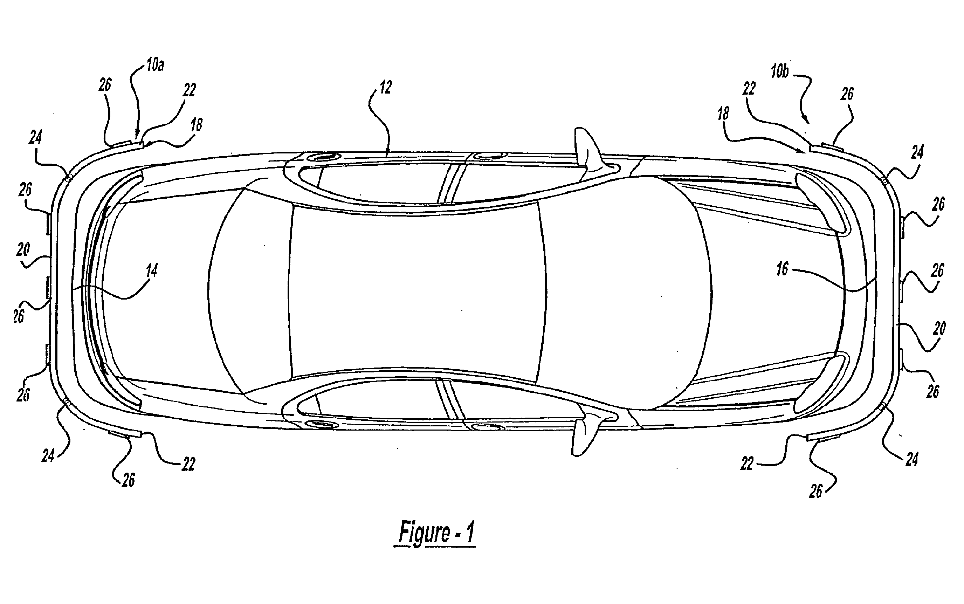

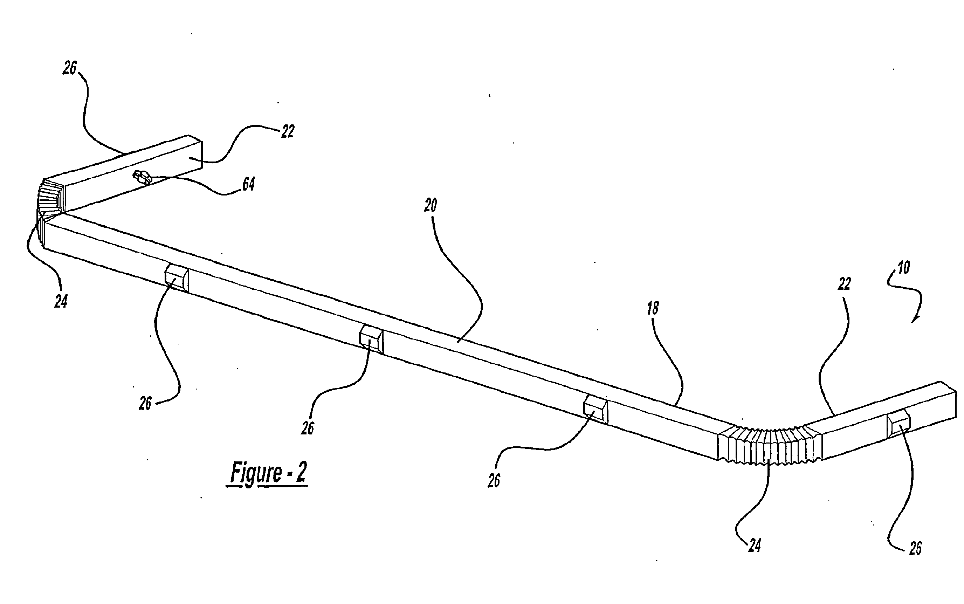

With reference to the figures; Figures 1 and 2 depict a sensor carrier assembly 10, with reference numeral 10a referring to a rear sensor carrier assembly and reference numeral 10b referring to a front carrier sensor assembly. Sensor carrier assemblies 10a, 10b will generally be referred to as sensor carrier assembly 10. Sensor carrier assembly 10 mounts to a vehicle 12 having a rear end 14 and a front end 16. It should be noted that Figure 1 generally shows a plan view directed to generally teaching a vehicle including a sensor carrier assembly 10 which may be mounted to the front or rear ends of the vehicle. One skilled in the art will recognize that sensor assemblies can be mounted to the sides or portions of the sides and ends of the vehicle. Further, as will be described herein, sensor carrier assembly 10 may be mounted in various ways to maintain a decorative appearance of the vehicle.

Each sensor carrier assembly 10 includes a carrier (supporting device) 18. Carrier 18 as shown in Figures 1 and 2 includes a central section 20 and end sections 22. Carrier 18 generally defines an elongated member comprising the sections 20 and 22. The sections are interconnected by a hinge 24, such as a living hinge, which enables end sections 22 to fold with respect to central section 20. Hinges 24 thus facilitate attaching sensor carrier assembly 10 to vehicle 12, particularly in areas where sensor carrier assembly 10 desirably wraps around a curved section of vehicle 12. Hinges 24 also facilitate shipment of sensor carrier assembly 10 by enabling sensor carrier assembly 10 to assume a more compact configuration for shipping by folding end sections 22 inward toward central section 20.

Carrier 18 supports one or a plurality of sensors 26. Sensors 26 will be described herein with respect to a radar-based collision avoidance system, and will generally be described as radar sensors. More particularly, sensors 26 generally define a radar transmitter/receiver pair integral in a single sensor assembly. Thus, each sensor transmits a radar signal and detects the returned radar signal upon reflection from an object within view of that particular sensor. Alternatively, one or a plurality of sensors 26 transmit a radar signal, and the other sensors of the plurality detect the returned radar signal reflected back from an object within the view of those particular radar sensors. While one skilled in the art will recognize that sensors 26 are described herein as radar sensors, alternate sensor embodiments such as infrared (IR) and acoustical or sound-based sensors may be similarly configured.

Sensors 26 are preferably arranged to cover a predetermined zone with respect to the vehicle. For example, the sensors 26 arranged on carrier assembly 10a at rear end 14 of vehicle 12 cover various areas around the vehicle not fully viewable using vehicle interior and exterior mirrors. Thus, the radar system implemented by sensors 26 on sensor carrier assembly 10a covers vehicle blind spots. Sensor carrier assembly 10b on the other hand, may be used particularly to implement a collision avoidance system which detects oncoming vehicles or objects within a predetermined field of view. Thus, sensors 26 of sensor carrier assembly 10b, while not covering blind spots, assists the driver in detecting oncoming objects with which vehicle 12 could collide.

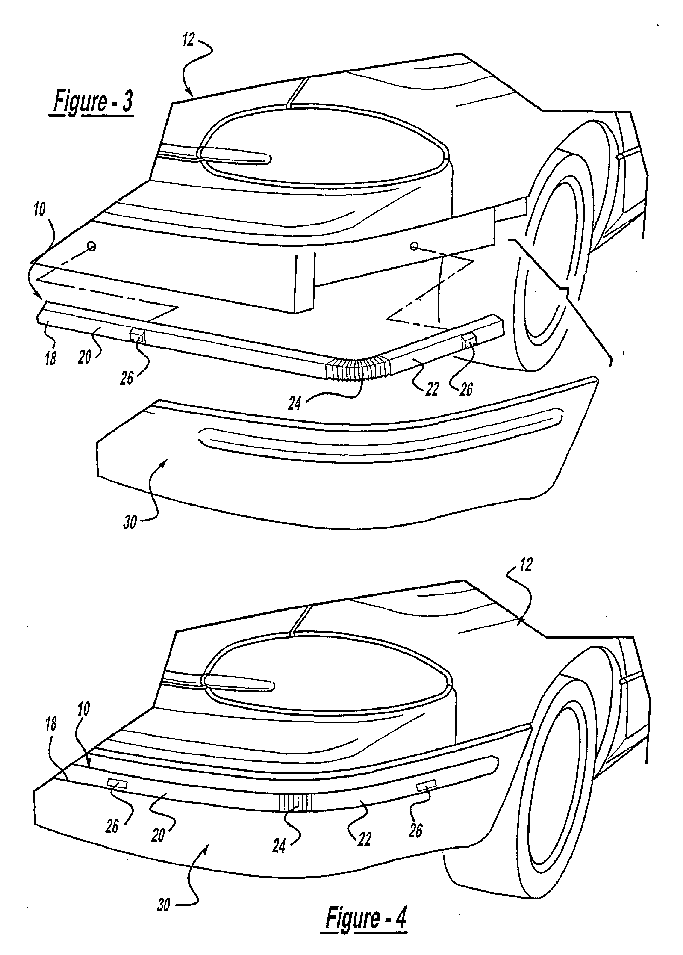

Figures 3 and 4 depict alternate configurations for mounting sensor carrier assembly 10 to vehicle 12. Figure 3 depicts a first configuration in which sensor carrier assembly 10 mounts directly to vehicle 12. A bumper assembly 30 then attaches to vehicle 12 so as to cover sensor carrier assembly 10. In this configuration, sensors 26 preferably transmit and receive through the plastic or other material of bumper assembly 30. This configuration provides the preferred radar coverage while leaving the decorative appearance of the vehicle undisturbed, as bumper assembly 30 covers sensor carrier assembly 10.

Figure 4 depicts an alternative configuration for mounting sensor carrier assembly 10 to vehicle 12. In Figure 4, bumper assembly 30 is mounted directly to vehicle 12, and sensor carrier assembly 10 mounts to bumper assembly 30. In the configuration of Figure 4, sensor carrier assembly 10 preferably maintains a suitable decorative appearance by appearing as a plastic molding or trim strip mounted to bumper assembly 30.

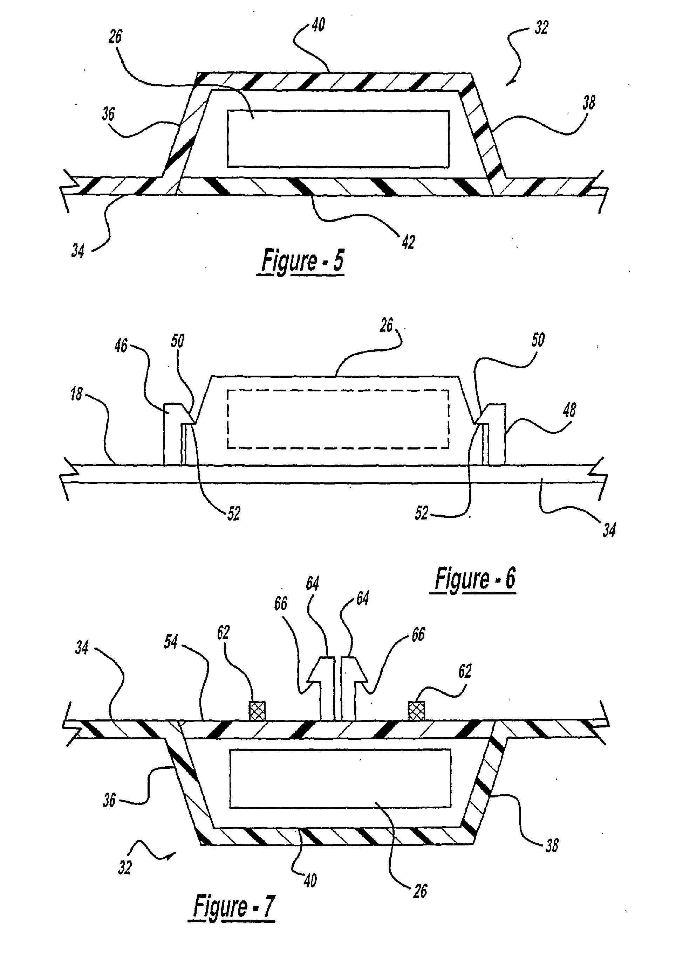

Figures 5 and 6 depict alternate configurations for attaching a sensor 26 to one of the respective central section 20 or end section 22. With reference to Figure 5, a sensor 26 resides within a sealed compartment 32 formed in carrier 18. The area around sealed compartment 32 includes beam 34, first side wall 36, second side wall 38, third and fourth side walls (not shown), and end wall 40. A seal 42 is placed generally in line with beam 34 and between the side walls. Seal 42 provides an environmental seal for sensor 26. Seal 42 preferably is maintained through an interference fit, adhesives, or other means known to those skilled in the art. Electrical conductors (not shown) exit from sealed compartment 32 while maintaining an environmental seal.

Figure 6 depicts a second configuration for mounting sensor 26 to carrier 18. Carrier 18 includes a beam 34, as described above in Figure 5. A pair of clips 46, 48, project outwardly from beam 34. Clips 46, 48 include hooks 50 which define a notch that engages a step 52 formed along the side wall of the exterior packaging of sensor 26. Clips 46, 48 preferably bend away from each other. Upon insertion, steps 52 on the side walls of sensor 26 push clips 46, 48 away from each other so that steps 52 can engage the notches formed by hooks 50.

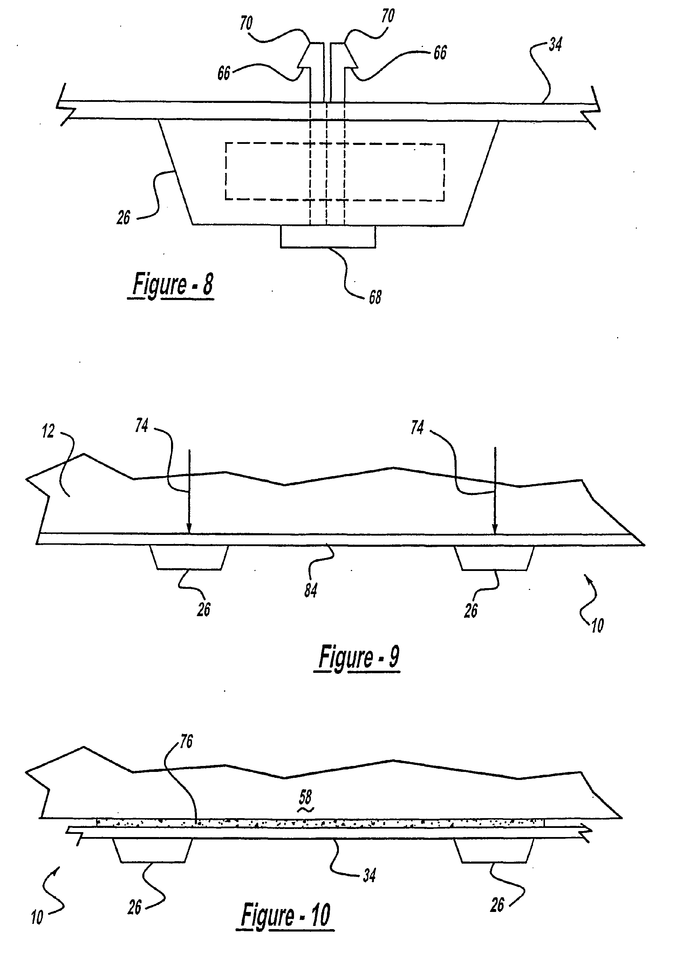

Another feature of the present invention can be found with respect to attachment of the carrier 18 to the vehicle 12. In particular, carrier 18 attaches to vehicle 12 by fasteners which preferably are disposed in proximity to sensors 26 in order to better align the sensor with respect to the vehicle. Such alignment can be critical when radar sensors have a defined sweep angle, and the sensor must be properly aligned to properly cover the desired blind spot. Figures 7 and 8 depict two separate approaches to fasten the carrier 18 to the vehicle 12.

With respect to Figure 7, Figure 7 depicts a sealed compartment 32, similar to that discussed in Figure 5. Sealed compartment 32 has side walls 36, 38, two other side walls (not shown), and end wall 40. The side walls and end wall 40 cooperate with seal 54 to provide an environmental seal for sensor 26. Seal 54 is generally aligned with beam 34 to provide an environmental seal for sensor 26. Seal 54 includes a pair of alignment pins 62 which align with corresponding holes or apertures (not shown) on vehicle 12 or bumper assembly 30, depending upon to which component carrier 18 attaches. Disposed between alignment pins 62 are a pair of clips 34 which cooperate to define a tree clip. Clips 64 include a lip 66 which engages a surface in proximity to an aperture in which clips 64 are inserted. Such a configuration fastens carrier 18 to one of vehicle 12 or bumper assembly 30 as described above.

Figure 8 depicts a second fastening configuration for attaching sensor carrier assembly 10 to one of a vehicle 12 or bumper assembly 30. As shown in Figure 8, sensor 26 attaches to beam 34 by a fastener 68. Fastener 68 preferably passes through sensor 26 or in proximity (adjacent) to sensor 26 thereby attaching sensor 26 to beam 34. Fastener 68 also passes through beam 34 and includes a pair of clips 70 which pass through beam 34 and enable attachment to one of vehicle 12 or bumper assembly 30. The dips 70 include a lip 66 and cooperate to form a tree clip which engages a surface adjacent to an aperture in which the clips 70 are inserted on the vehicle 12 or bumper assembly 30.

Figure 9 depicts a particular configuration of fastener placement for mounting sensor carrier assembly 10 to the vehicle 12, either directly or to a bumper assembly. In particular, a pair of sensors 26 attach to beam 34 by any of the attaching arrangements discussed above. Fasteners 74 attach sensor carrier assembly 10 to vehicle 12. Fasteners 74 may embody any configuration of the fasteners described herein. Fasteners 74 are placed in close proximity to sensors 26 to ensure alignment of the sensors with respect to vehicle 12 and to ensure attachment of the sensors to a hard point on the vehicle.

Figure 10 depicts a sensor carrier assembly 10 including a pair of sensors 26 mounted to a beam 34 of carrier 18. Beam 34 of carrier 18 attaches to vehicle 12. In a particular feature of the present invention of Figure 10, a layer of generally soft material 76, such as foam having a pressure sensitive adhesive, can be placed between beam 34 and mounting substrate 58, which can be any of vehicle 12 or bumper assembly 30, depending upon the preferred mounting method for the particular application. Soft material 76 reduces rubbing, noise, and vibration which might be otherwise generated at the interconnection between sensor carrier assembly 10 and mounting substrate 58.

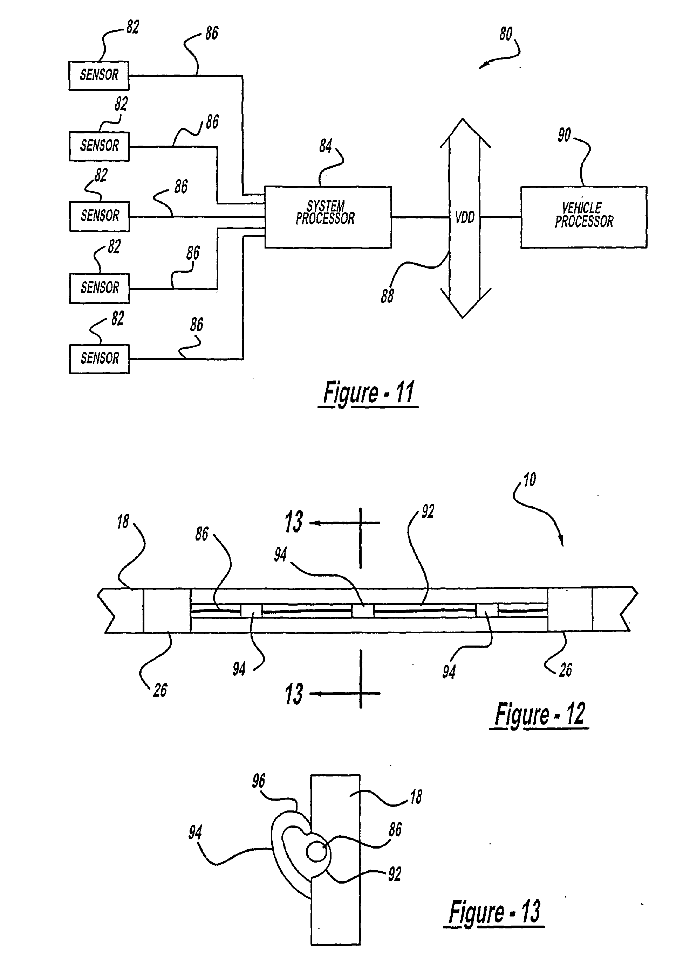

Figure 11 depicts a block diagram for a sensor processing system 80, such as a collision avoidance system. Sensor processing system 80 includes a plurality of sensors 82, which may operate as described with respect to sensors 26. Sensors 82 connect to a system processor 84 via electrical conductors 86. Electrical conductors 86 transmit electrical signals between sensors 82 and system processor 84 so that system processor 84 can cause sensor 82 to transmit a signal and/or can receive signals output by sensors 82 in response to detection of the sensed parameter.

System processor 84 processes the collective information generated by sensors 82 and outputs a control information signal to a vehicle data busy (VDB) 88. VDB 88 interconnects one or a plurality of processors, such as system processor 84 and vehicle processor 90. Vehicle processor 90 interprets information output on vehicle data bus 88 by system processor 84 and generates control signals.

In the case of a collision avoidance system, one or a plurality of sensors 82 may either or both transmit and receive radar signals in accordance with control commands from system processor 84. System processor 84 then interprets the reflected signals and generates an output signal on vehicle data bus 88, which may indicate a possible collision situation. Vehicle processor 90 interprets the output signal supplied to VDB 88 by system processor 84 and generates corresponding control commands to various visual or audible indicators (not shown) or other vehicle control systems (not shown) to warn the driver of a possible collision. One skilled in the art will recognize that sensor carrier assembly 10 may include system processor 84. In doing so, system processor 84 mounts to sensor carrier assembly 10 so that sensor carrier assembly 10 may be marketed as a complete system for assembly to the vehicle followed by electrical connection.

As discussed above, electrical conductors 86 interconnect sensors 82 to system processor 84. In some applications, electrical conductors 86 also interconnect sensors 82. Sensor carrier assembly 10 provides an additional feature by providing grooves or clips for routing electrical conductors within sensor carrier assembly 10. Figures 12 and 13 depict a portion of sensor carrier assembly 10. A pair of sensors 26 mount to carrier 18 and are interconnected by electrical conductors 86. A groove 92, or a plurality of grooves, formed on carrier 18 receive electrical conductors 86. Further, one or a plurality of clips 94 assist in maintaining electrical conductors 86 securely to carrier 18. As shown in Figure 13, clip 94 is formed in a general hook shape resiliently formed to press against carrier 18. Electrical conductors 86 pass between end portion 96 of clip 94 and carrier 18 for placement within groove 92. In some applications, groove 92 may be unnecessary, as clips 94 may suitably perform their retention function.

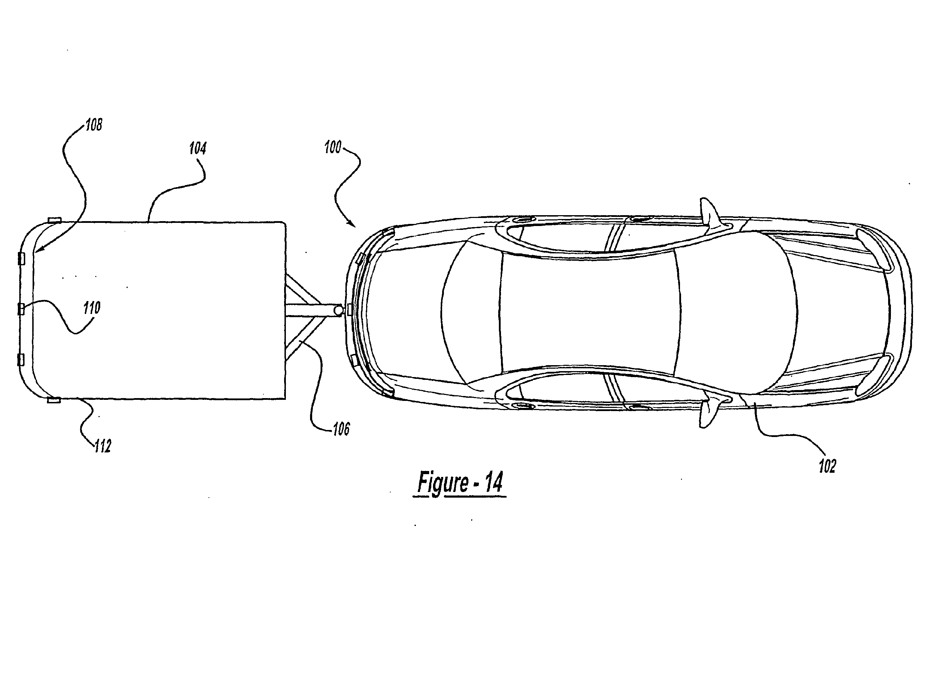

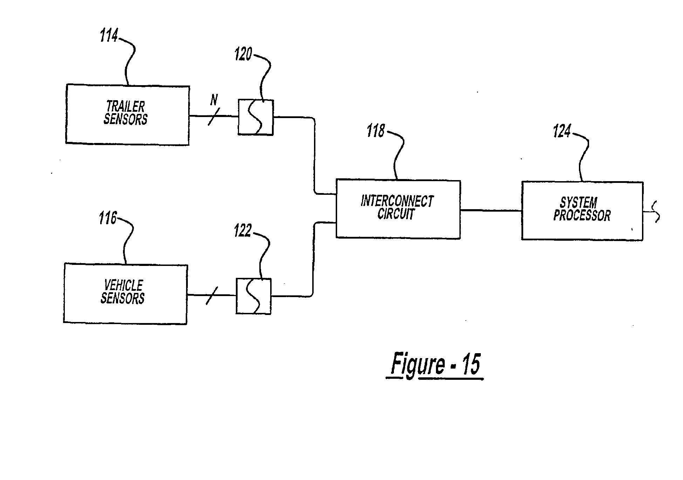

While sensor carrier assembly 10 described with respect to Figures 1-13 suitably provides a sensor carrier assembly for convenient installation and utilization on a vehicle, additional considerations exist for accommodating a vehicle attached to and towing a trailer. When a trailer is towed behind a vehicle, the collision avoidance sensors would undesirably detect the trailer in tow behind the vehicle. The trailer would constantly set off the collision avoidance alarms, possibly prompting the driver to disable the collision avoidance system. In yet an additional feature of the present invention, Figures 14 and 15 depict a collision avoidance system adapted to utilization with a trailer.

Figure 14 depicts a vehicle 102 having a sensor carrier assembly 100 generally arranged as described above with respect to Figures 1 -13. Vehicle 102 is adapted to tow a trailer 104 arrange behind and attached to vehicle 102. A trailer hitch assembly 106 interconnects vehicle 102 with trailer 104. Trailer hitch assembly 106 may be arranged in any of a number of hitch configurations well known to those skilled in the art. Trailer 104 includes a trailer sensor carrier assembly 108. Trailer sensor carrier assembly 108 interconnects to trailer 104 to provide a plurality of sensors toward the rear end 110 and sides 112 of trailer 104. Trailer sensor carrier assembly 108 is generally configured as described above with respect to sensor carrier assembly 10 in Figures 1-13. In particular, trailer sensor carrier assembly 108 supports one or a plurality of sensors as described above and connects to trailer 104 either internally or externally to a bumper portion of trailer 104.

In operation, when trailer 104 is connected to vehicle 102, preferably the collision avoidance sensors attached to the rear end of vehicle 102 are interpreted to account for the presence of trailer 104 in favor of utilizing signals provided by collision avoidance sensors on trailer sensor carrier assembly 108. Figure 15 depicts a block diagram of an interconnect lockout circuit for selecting between one of trailer sensors or vehicle sensors for input to a system processor, as described in Figure 11.

In Figure 15, one or a plurality of trailer sensors 114 correspond to sensors arranged on trailer sensor carrier assembly 108. One or a plurality of vehicle sensors 116 correspond to collision avoidance sensors arranged on sensor carrier assembly 100 of vehicle 102. Trailer sensors 114 output one or a plurality of electrical signals to interconnect circuit 118. Similarly, vehicle sensors 116 output one or a plurality of signals to interconnect circuit 118. A connector 120 facilitates interconnection between trailer sensors 114 and 118. Similarly, a connector 122 facilitates interconnection between vehicle sensors 116 and interconnect circuit 118.

Interconnect circuit 118 preferably detects whether trailer sensors 114 are placed within the system by connection through connector 120. If so, interconnect circuit 118 disables or ignores portions of the input received from vehicle sensors 116 in favour of alternate input received from trailer sensors 114. Interconnect circuit 118 then outputs one or a plurality of signals to system processor 124. System processor 124 operates as described above with respect to system processor 84 of Figure 11. Once interconnect circuit 118 has signals or portions of signals selected for input to system processor 124, operation proceeds as described above. In this manner, by simply introducing trailer sensors 114 into the system, proper collision avoidance can occur.

While the invention has been described in its presently preferred form, it is to be understood that there are numerous applications and implementations for the present invention. Accordingly, the invention is capable of modification and changes without departing from the scope of the appended claims.

## Claims

1. A sensor assembly (10) for a vehicle comprising:
a plurality of sensors (26); and
a supporting device (18), wherein the plurality of sensors (26) are mounted to the supporting device (18); the supporting device (18) being mounted to the vehicle (12) to orient the sensors (26) in a predetermined position on the vehicle (12), wherein a fastener (68) attaches the supporting device (18) to the vehicle (12)
**characterized by** that the fastener (68) is at the position of a sensor (26) to maintain the predetermined position of that sensor (26).

2. The assembly (10) of claim 1 wherein the plurality of sensors (26) comprises sensors for a radar system.

3. The assembly (10) of claim 2 wherein at least one sensor (26) for the radar system further comprises at least one of a transmitter for generating a radar signal and a receiver for detecting the radar signal upon reflection from an object.

4. The assembly (10) of any one of the preceding claims, wherein the supporting device (18) mounts to an end of the vehicle (12) and wherein the supporting device (18) mounts to the bumper (30) or mounts to the vehicle (12) and is covered by the bumper (30).

5. The assembly (10) of claim 4 wherein the fastener (68, 74) further comprises one of a clip (68, 70) or a threaded fastener to secure the supporting device (18) to the vehicle (12).

6. The assembly (10) of any one of the preceding claims, wherein the supporting device (18) is an elongate member (34).

7. The assembly (10) of claim 6 wherein the supporting device (18) is formed in sections interconnected by a hinge member (24).

8. The assembly (10) of any one of the preceding claims, wherein the supporting device (18) further comprises a wire holder for supporting wires connected to sensors.

9. The assembly (10) of claim 8 wherein the wire holder comprises one of clips (94) or grooves (92) supported by the supporting device (18).

10. The assembly (10) of any one of the preceding claims, further comprising a processor (84), the processor (84) receiving signals from the plurality of sensors (82) and determining if an object is in proximity to the vehicle (12).

11. The assembly (10) of any one of the preceding claims, further comprising:
a plurality of recesses (32) formed in the supporting device (18), the recesses (32) receiving one or a lumber of each of the plurality of sensors (82) to attach the sensors (82) to the supporting device (18).

12. The assembly (10) of claim 11 wherein the recesses (32) are sealed to protect the plurality of components received therein.

13. The assembly (10) of any one of the preceding claims, further comprising a resilient material (76) disposed between the supporting device (18) and the vehicle (12), the resilient material (76) reducing vibration between the supporting device (18) and the vehicle (12).

14. A sensor assembly system (100) for a caravan, said caravan consisting of a first vehicle (102) and a second vehicle (104), the second vehicle being attached to and towed behind the first vehicle; said sensor assembly system (100) comprising:
a first plurality of sensors;
a first supporting device, each of the first plurality of sensors being mounted to the first supporting device, wherein the first supporting device is mounted to the first vehicle (102) to orient the first plurality of sensors in a predetermined position on the first vehicle (102), wherein a first fastener (68) attaches the first supporting device (18) to the first vehicle (12)
a second plurality of sensors;
a second supporting device, each of the second plurality of sensors being mounted to the second supporting device (108), wherein the second supporting device is mounted to the second vehicle (104) to orient the second plurality of sensors in a predetermined position on the second vehicle (104), wherein a second fastener attaches the second supporting device to the second vehicle; and
an interconnect circuit (118), wherein the interconnect circuit (118) receives input from each of the first and second plurality of sensors, and the interconnect circuit (118) selecting for output all or a portion of the input from one of the first and second plurality of sensors., **characterized in that** the first and the second are at the position of a sensor to maintain the predetermined position of that sensor.

15. The assembly of claim 14 wherein; when the interconnect switch (118) detects input from the second plurality of sensors (114), the interconnect switch (118) selects for the output, the input from the second plurality of sensors (114) and a portion of or none of the input from the first plurality of sensors (116).

16. The assembly of claim 14 or 15 wherein, when the interconnect switch (118) detects input from only the first plurality of sensors (116), the interconnect switch (118) selects for the output the input from the first plurality of sensors (116).

17. The assembly of any one of claims 14 to 16, wherein the first and second plurality of sensors (116, 114) comprise sensors for a radar system.

18. The assembly of claim 17 wherein at least one sensor of the first and second plurality of sensors (116, 114) for the radar system further comprises at least one of a transmitter for generating a radar signal and a receiver for detecting the radar signal upon reflection from an object.

## Patentansprüche

1. Sensoranordnung (10) für ein Fahrzeug, die Folgendes aufweist:
eine Mehrzahl von Sensoren (26); und
eine Haltevorrichtung (18), wobei die Mehrzahl der Sensoren (26) an der Haltevorrichtung (18) befestigt ist; die Haltevorrichtung (18) an dem Fahrzeug (12) befestigt ist, um die Sensoren (26) in einer vorbestimmten Position an dem Fahrzeug (12) auszurichten, wobei ein Befestigungsmittel (68) die Haltevorrichtung (18) an dem Fahrzeug (12) befestigt, wobei das Befestigungsmittel (68) sich an der Position eines Sensors (26) befindet, um die vorbestimmte Position des Sensors (26) aufrechtzuerhalten.

2. Anordnung (10) nach Anspruch 1, wobei die Mehrzahl von Sensoren (26) einen Sensor für ein Radarsystem aufweist.

3. Anordnung (10) nach Anspruch 2, wobei mindestens ein Sensor (26) für das Radarsystem weiterhin mindestens einen Sender aufweist, um ein Radarsignal zu erzeugen und einen Empfänger, um ein Radarsignal nach Reflektion von einem Gegenstand zu erkennen.

4. Anordnung (10) gemäss einem der vorgehenden Ansprüche, wobei die Haltevorrichtung (18) an einem Ende des Fahrzeugs (12) befestigt wird und wobei die Haltevorrichtung (18) an der Stoßstange (30) befestigt wird, oder an dem Fahrzeug (12) befestigt wird und von der Stoßstange (30) abgedeckt wird.

5. Anordnung (10) nach Anspruch 4, wobei das Befestigungsmittel (68, 74) weiterhin entweder eine Klammer (68) oder ein mit einem Gewinde versehenes Befestigungsmittel aufweist, um die Haltevorrichtung (18) an dem Fahrzeug (12) zu befestigen.

6. Anordnung (10) gemäss einem der vorgehenden Ansprüche, wobei die Haltevorrichtung ein längliches Bauteil (34) ist.

7. Anordnung (10) nach Anspruch 6, wobei die Haltevorrichtung (18) in Abschnitten geformt ist, die von einem Scharnierbauteil (24) verbunden sind.

8. Anordnung (10) gemäss einem der vorgehenden Ansprüche, wobei die Haltevorrichtung (18) weiterhin einen Kabelhalter zum Halten der mit dem Sensor verbundenen Kabel aufweist.

9. Anordnung (10) nach Anspruch 8, wobei der Kabelhalter entweder Klammern (94) oder Nuten (92) aufweist, die von der Haltevorrichtung (18) gehalten werden.

10. Anordnung (10) gemäss einem der vorgehenden Ansprüche, die weiterhin einen Prozessor (84) aufweist, wobei der Prozessor (84) Signale von der Mehrzahl von Sensoren (82) empfängt und feststellt, ob sich ein Gegenstand in der Nähe des Fahrzeugs (12) befindet.

11. Anordnung (10) gemäss einem der vorgehenden Anspruche, die weiterhin Folgendes aufweist:
eine Mehrzahl von Ausnehmungen (32), die in der Haltevorrichtung (18) gebildet sind, wobei die Ausnehmungen (32) jeweils einen oder mehrere der Sensoren (82) aufnehmen um die Sensoren (82) mit der Haltevorrichtung zu verbinden.

12. Anordnung (10) nach Anspruch 11, wobei die Ausnehmungen (32) dazu abgedichtet sind, die Mehrzahl der darin aufgenommenen Bauteile zu schützen.

13. Anordnung (10) gemäss einem der vorgehenden Ansprüche, die weiterhin einen nachgiebigen Werkstoff (76) aufweist, der zwischen der Haltevorrichtung (18) und dem Fahrzeug (12) angeordnet ist, wobei der nachgiebige Werkstoff (76) die Schwingungen zwischen der Haltevorrichtung (18) und dem Fahrzeug (12) verringert.

14. Sensor Montage System (100) für einen Lastzug, wobei der Lastzug aus einem ersten Fahrzeug (102) und einem zweiten Fahrzeug (104) besteht, wobei das zweite Fahrzeug an dem ersten Fahrzeug befestigt ist und hinter dem ersten Fahrzeug gezogen wird; wobei das Sensor Montage System Folgendes aufweist:
eine erste Mehrzahl von Sensoren;
eine erste Haltevorrichtung, wobei jeder Sensor aus der ersten Mehrzahl von Sensoren an der ersten Haltevorrichtung befestigt ist, wobei die erste Haltevorrichtung an dem ersten Fahrzeug (102) befestigt ist um die erste Mehrzahl von Sensoren in einer vorbestimmten Position des ersten Fahrzeugs (102) auszurichten, wobei ein erstes Befestigungsmittel (68) die erste Haltevorrichtung (18) an dem ersten Fahrzeug (12) befestigt;
eine zweite Mehrzahl von Sensoren;
eine zweite Haltevorrichtung, wobei jeder Sensor der zweiten Mehrzahl von Sensoren an der zweiten Haltevorrichtung (108) befestigt ist, wobei die zweite Haltevorrichtung an dem zweiten Fahrzeug (104) befestigt ist um die zweite Mehrzahl von Sensoren in einer vorbestimmten Position an dem zweiten Fahrzeug (104) auszurichten, wobei ein zweites Befestigungsmittel die zweite Haltevorrichtung an dem zweiten Fahrzeug befestigt; und
eine Verbindungsschaltung (118), wobei die Verbindungsschaltung (118) jeweils eine Eingabe von der ersten und von der zweiten Mehrzahl von Sensoren erhält, und die Verbindungsschaltung (118) zur Ausgabe den gesamten Eingang oder einen Teil des Eingangs von einem aus der ersten oder aus zweiten Mehrzahl von Sensoren auswählt, wobei das erste und das zweite Befestigungsmittel an dem Ort eines Sensors ist, um die vorbestimmte Position des Sensors aufrechtzuerhalten.

15. Anordnung nach Anspruch 14, wobei wenn die Verbindungsschaltung (118) eine Eingabe von der zweiten Mehrzahl von Sensoren (114) feststellt, die Verbindungsschaltung (118) zur Ausgabe den Eingang von der zweiten Mehrzahl von Sensoren (114) auswählt, und einen Teil oder nichts aus der Eingabe von der ersten Mehrzahl von Sensoren (116) auswählt.

16. Anordnung nach Anspruch 14 oder 15, wobei wenn die Verbindungsschaltung (118) die Eingabe lediglich von der ersten Mehrzahl von Sensoren (116) feststellt, die Verbindungsschaltung (118) die Eingabe von der ersten Mehrzahl von Sensoren (116) zur Ausgabe auswählt.

17. Anordnung gemäss einem der Ansprüche 14 bis 16, wobei die erste und die zweite Mehrzahl von Sensoren (116, 114) Sensoren für ein Radarsystem aufweist.

18. Anordnung nach Anspruch 17, wobei mindestens ein Sensor der ersten und der zweiten Mehrzahl von Sensoren (116, 114) des Radarsystems weiterhin mindestens einen Sender zum Erzeugen eines Radarsignals und einen Empfänger zum Erkennen des Radarsignals nach Reflektion von einem Gegenstand aufweist.

## Revendications

1. Ensemble de détection (10) pour un véhicule, comprenant :
plusieurs détecteurs (26) ; et
un dispositif de support (18), sachant que les détecteurs (26) sont montés sur le dispositif de support (18), le dispositif de support (18) étant monté sur le véhicule (12) pour orienter les détecteurs (26) dans une position prédéterminée sur le véhicule (12), sachant qu'une pièce de fixation (68) fixe le dispositif de support (18) sur le véhicule (12),
**caractérisé en ce que** la pièce de fixation (68) se trouve à l'emplacement d'un détecteur (26) afin de maintenir la position prédéterminée de cc détecteur (26).

2. Ensemble (10) selon la revendication 1, dans lequel les détecteurs (26) sont des détecteurs d'un système radar.

3. Ensemble (10) selon la revendication 2, dans lequel au moins un détecteur (26) du système radar comprend en outre au moins soit un émetteur pour générer un signal radar, soit un récepteur pour détecter le signal radar suite à sa réflexion par un objet.

4. Ensemble (10) selon l'une quelconque des revendications précédentes, dans lequel le dispositif de support (18) est monté à une extrémité du véhicule (12), et dans lequel le dispositif de support (18) est monté sur le parc-chocs (30), ou est monté sur le véhicule (12) et est recouvert par le pare-chocs (30).

5. Ensemble (10) selon la revendication 4, dans lequel la pièce de fixation (68, 74) comprend en outre soit un clip (68, 70), soit une pièce de fixation filetée pour fixer le dispositif de support (18) sur le véhicule (12).

6. Ensemble (10) selon l'une quelconque des revendications précédentes, dans lequel le dispositif de support (18) est un élément oblong (34).

7. Ensemble (10) selon la revendication 6, dans lequel le dispositif de support (18) est constitué de sections reliées entre elles par un élément d'articula2ion (24).

8. Ensemble (10) selon l'une quelconque des revendications précédentes, dans lequel le dispositif de support (18) comprend en outre un support de câbles pour supporter des câbles électriques reliés aux détecteurs.

9. Ensemble (10) selon la revendication 8, dans lequel le support de câbles comprend soit des clips (94), soit des rainures (92), supportés par le dispositif de support (18).

10. Ensemble (10) selon l'une quelconque des revendications précédentes, comprenant en outre un processeur (84), le processeur (84) recevant des signaux des détecteurs (82) et déterminant si un objet se trouve à proximité du véhicule (12).

11. Ensemble (10) selon l'une quelconque des revendications précédentes, comprenant en outre une pluralité d'évidements (32) formés dans le dispositif de support (18), les évidements (32) recevant un ou plusieurs des détecteurs (82) pour fixer les détecteurs (82) sur le dispositif de support (18).

12. Ensemble (10) selon la revendication 11, dans lequel les évidements (32) sont étanchés pour protéger les éléments reçus à l'intérieur d'eux.

13. Ensemble (10) selon l'une quelconque des revendication précédentes, comprenant en outre un matériau souple (76) disposé entre le dispositif de support (18) et le véhicule (12), le matériau souple (76) réduisant les vibrations entre le dispositif de support (18) et le véhicule (12).

14. Système de détection (100) pour un ensemble routier, l'ensemble routier étant constitué d'un premier véhicule (102) et d'un deuxième véhicule (104), le deuxième véhicule étant attaché au premier véhicule et tracté derrière celui-ci, ledit système de détection (100) comprenant :
plusieurs premiers détecteurs ;
un premier dispositif de support, les premiers détecteurs étant chacun montés sur le premier dispositif de support, sachant que le premier dispositif de support est monté sur le premier véhicule (102) pour orienter les premiers détecteurs dans une position prédéterminée sur le premier véhicule (102), sachant qu'une première pièce de fixation (68) fixe le premier dispositif de support (18) sur le premier véhicule (102),
plusieurs deuxièmes détecteurs ;
un deuxième dispositif de support, les deuxièmes détecteurs étant chacun montés sur le deuxième dispositif de support (108), sachant que le deuxième dispositif de support est monté sur le deuxième véhicule (104) pour orienter les deuxièmes détecteurs dans une position prédéterminé sur le deuxième véhicule (104), sachant qu'une deuxième pièce de fixation fixe le deuxième dispositif de support sur le deuxième véhicule ; et
un circuit d'interconnexion (118), sachant que le circuit d'interconnexion (11.8) reçoit des entrées des premiers et des deuxièmes détecteurs, et que le circuit d'interconnexion (118) sélectionne pour la sortie toutes les entrées ou une partie des entrées provenant des premiers et des deuxièmes détecteurs,
**caractérisé en ce que** la première et la deuxième pièces de fixation se trouvent à l'emplacement d'un détecteur affin de maintenir la position prédéterminée de ce détecteur.

15. Système selon la revendication 14, dans lequel le commutateur d'interconnexion (118) détecte des entrées provenant des deuxièmes détecteurs (1.1.4), et le commutateur d'interconnexion (118) sélectionne pour la sortie les entrées provenant des deuxièmes détecteurs (114) et une partie ou aucune des entrées provenant des premiers détecteurs (116).

16. Système selon la revendication 14 ou 15, dans lequel le commutateur d'interconnexion (118) détecte des entrées provenant uniquement des premiers détecteurs (116), et le conmmutateur d'interconnexion (118) sélectionne pour la sortie les entrées provenant des premiers détecteurs (116).

17. Système selon l'une quelconque des revendications 14 à 16, dans lequel les premiers et les deuxièmes détecteurs (116, 114) sont des détecteurs pour un système radar.

18. Système selon la revendication 17, dans lequel au moins un détecteur des premiers et des deuxièmes détecteurs (116, 114) pour le système radar comprend en outre au moins soit un émetteur pour générer un signal radar, soit un récepteur pour détecter le signal radar suite à sa réflexion par un objet.
